# EUROPEAN PATENT APPLICATION

(11) **EP 1 130 901 A2**
(43) Date of publication of application: **05.09.2001**
(21) Application number: 00124287.4
(22) Date of filing: 14.11.2000
(51) Int. Cl.: H04N 5/225

(54) **Digital camera with card slot**

(30) Priority: 16.11.1999 JP 32547199
(71) Applicant: MINOLTA CO., LTD., Chuo-Ku, Osaka-Shi, Osaka 541-8556 (JP)
(72) Inventor: Niikawa, Masahito, c/o Minolta Co., Ltd., Chuo-Ku, Osaka-shi, Osaka 541-8556 (JP); Kubo, Hiroaki, c/o Minolta Co., Ltd., Chuo-Ku, Osaka-shi, Osaka 541-8556 (JP)
(74) Representative: HOFFMANN - EITLE

(57) **Abstract**

When an audio card is inserted in a digital camera, the LCD screen in recording and playback modes displays an item AI ("Audio") in addition to the items being displayed in the case of insertion of only a memory card. At this time, audio data can be recorded from the audio card with a press of a key switch (223). In a preference mode, an item AS ("Audio") is additionally displayed. By moving a cursor (CS), a user can select any of the items on display. When the cursor (CS) is placed at the item ("Audio") and a key switch (221) is pressed, a list of items for the sampling rate (CD or radio audio quality) is displayed, from which a user can select and set a desired sampling rate. After selection of the sampling rate, the digital camera returns to the recording mode, in which mode attendant audio data can be recorded while temporary images captured are displayed. This enhances the operability of the digital camera.

## Description

This application is based on application No. 11-325471 filed in Japan, the contents of which are hereby incorporated by reference.

### BACKGROUND OF THE INVENTION

### Field of the Invention

The present invention relates to a digital camera for generating digital image data on a subject.

### Description of the Background Art

Conventionally, digital cameras comprise nonvolatile storage for storing captured images. Especially for convenience in practical applications, many of such digital cameras use card-type flash memories which are insertable in their respective card slots.

Also, the use of function cards has been proposed. The function cards are cards other than memory cards, the insertion of which expands the capabilities of the digital cameras in the form of hardware. For example, Photo International magazine published in August, 1999 introduced the insertion of a USB card in the card slot.

The above conventional technique for inserting a USB card, however, has achieved only the transfer of recorded images to personal computers by switching the camera to the PC connection mode after the insertion of the USB card, in which case no consideration is given to the correlation between the function card and various settings of the camera and thus the camera has poor operability.

### SUMMARY OF THE INVENTION

The present invention is directed to a digital camera for generating digital image data on a subject.

According to an aspect of the present invention, the digital camera comprises a card slot part having a card slot, display means, display control means for controlling the display means, and card discrimination means for recognizing card insertion in the card slot. The card discrimination means determines whether a card inserted in the card slot is either a memory card for storing image data obtained with the digital camera or a function card for adding a function to the digital camera in which the memory card is inserted. When the card is judged as being the function card, the display control means controls the display means to display contents corresponding to an added function available with the function card.

The display is responsive to a function available with a function card and thus a user can readily grasp that function. This achieves ease of operation responsive to that function.

According to another aspect of the present invention, the digital camera comprises a card slot part having a card slot, display means, and display control means for controlling the display means. In response to insertion of a card in the card slot, the display control means changes items on the display according to a type of the card.

Operation responsive to such items achieves ease of use of the card because items on the display are changed according to the type of card inserted.

The present invention is also directed to a recording medium for recording a program to be installed in a digital camera.

Therefore, an object of the present invention is to improve the operability of a digital camera.

These and other objects, features, aspects and advantages of the present invention will become more apparent from the following detailed description of the present invention when taken in conjunction with the accompanying drawings.

### BRIEF DESCRIPTION OF THE DRAWINGS

Fig. 1 is a front view of a digital camera according to one preferred embodiment of the present invention;
Fig. 2 is a rear view of the digital camera according to one preferred embodiment of the present invention;
Fig. 3 is a side view of the digital camera according to one preferred embodiment of the present invention;
Fig. 4 is a bottom view of the digital camera according to one preferred embodiment of the present invention;
Fig. 5 is a block diagram of an internal construction of the digital camera;
Fig. 6 is a block diagram of a construction of an image processing unit;
Fig. 7 shows a data array in a memory card;
Fig. 8 shows examples of function cards connectable to the digital camera;
Fig. 9 is a state transition diagram of an LCD screen when a memory card is inserted in the digital camera;
Figs. 10 and 11 show a card insertion operation;
Fig. 12 shows an alarm display screen on the LCD;
Fig. 13 is a flow chart of a control procedure in an overall control unit;
Fig. 14 shows the structure of a USB card;
Fig. 15 shows a storage area for software drivers in a flash ROM built in the USB card;
Fig. 16 shows how to record software drivers on the flash ROM in the digital camera;
Fig. 17 shows a preference mode screen on the LCD with a card inserted;
Figs. 18A and 18B show the structure of an audio card;
Fig. 19 shows displays in each mode with the audio card inserted;
Fig. 20 shows the internal structure of a video output card;
Fig. 21 shows displays in each mode with the video output card inserted;
Fig. 22 is a flow chart of connection processing for communications through the use of a modem card;
Fig. 23 shows a connection-destination selection screen, which is the preference mode screen with the modem card inserted;
Fig. 24 shows the preference mode screen for uninstallation of software drivers;
Fig. 25 shows how to uninstall a software driver stored on the flash ROM in the digital camera; and
Figs. 26 and 27 are flow charts of a card removal operation.

### DESCRIPTION OF THE PREFERRED EMBODIMENTS

In the preferred embodiments of the present invention, the term "item" denotes each item being distinguished from others by the type of display contents. Herein, mere numerical differences are not considered different items.

For example, whether the "remaining amount of card memory" on display is either "3.5 MB" or "2.5 MB" is merely a numerical difference, i.e., a difference in the value of the same item. On the other hand, the "remaining amount of card memory" and the "modem transmission rate" are different categories, so they make different "items".

According to the preferred embodiments, the items on display are changed upon insertion of a function card in a card slot. Herein, the "changing of the items" refers not merely to numerical changes but to changes into different kinds of items as above described.

Now, preferred embodiments of the present invention will be discussed in conjunction with the drawings.

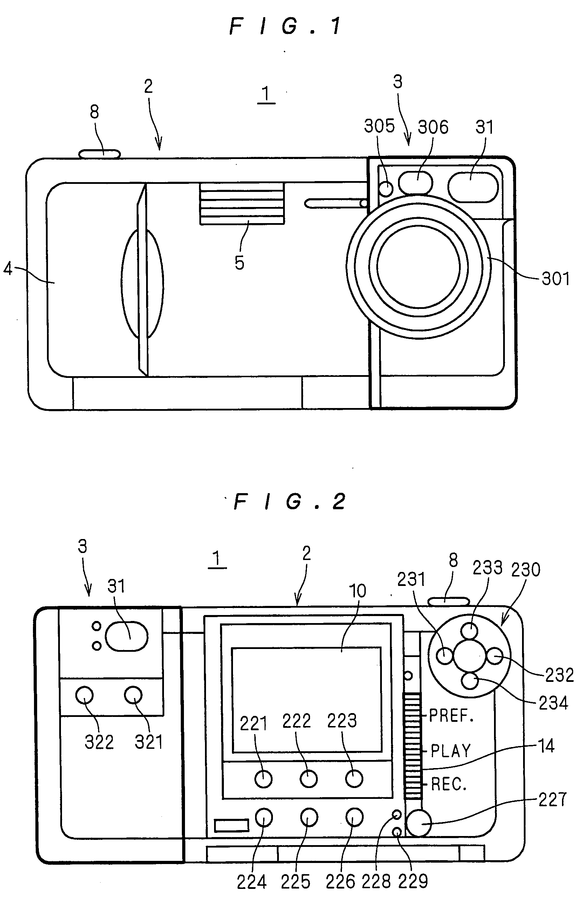

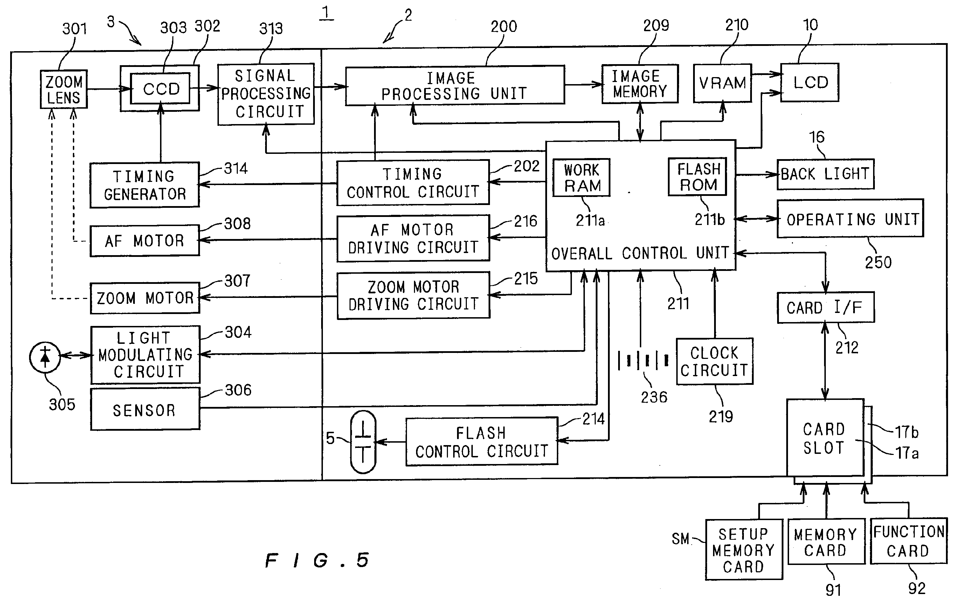

Figs. 1 to 4 are respectively front, rear, side, and bottom views of a digital camera 1 according to one preferred embodiment of the present invention. Fig. 5 is a block diagram of an internal construction of the digital camera 1.

The digital camera 1, as shown in Fig. 1, is comprised of a box-like camera body 2 and a rectangular imaging unit 3 (indicated by the bold lines in Figs. 1, 2, and 4). The imaging unit 3 comprises a zoom lens 301, which is a taking lens. As in a camera for silver halide films, the imaging unit 3 also comprises a light modulating sensor 305 for receiving the reflected light of flash light from a subject, a sensor 306 for measuring the distance to the subject, and an optical viewfinder 31.

Within the imaging unit 3, a CCD 303 (a CCD color area sensor, cf. Fig. 5) is located in a rearward position of the zoom lens 301, making part of an imaging circuit 302.

On the front face of the camera body 2, as shown in Fig. 1, a grip 4 is located at the left end and a built-in flash 5 in the upper central portion. On the upper surface thereof, a shutter start button 8 is provided.

On the rear face of the camera body 2, as shown in Fig. 2, an LCD 10 is located near the center for monitoring and display of images to be captured (corresponding to a viewfinder), for playback and display of recorded images, and the like. Below the LCD 10, there are provided a group of key switches 221 to 226 for operation of the digital camera 1, and a power switch 227. Also, an LED 228 that comes on with power on and an LED 229 that indicates that access is being made to a memory card are located on the left side of the power switch 227.

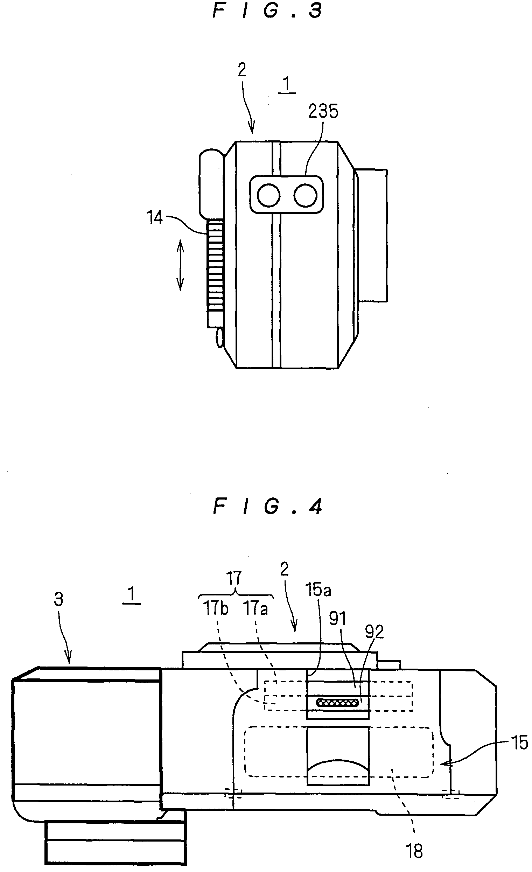

Further, a mode selection switch 14 for selection of modes, namely, "recording", "playback", and "preference" modes (cf. Fig. 3), is provided on the rear face of the camera body 2. The "recording" mode is a mode of picture taking; the "playback" mode is a mode of playing back and displaying images, which have been captured and recorded on a memory card, on the LCD 10; and the "preference" mode is a mode of making various settings by selecting displayed items (setting items). Operation in each mode will be discussed later.

The mode selection switch 14 is a three-position slide switch, which selects the recording mode when in the "down" position, the playback mode when in the "central" position, and the preference mode when in the "up" position in Fig. 2.

Further, a four-way switch 230 is provided on the right side of the rear face of the camera. In the recording mode, zooming is performed with a press of buttons 231 and 232 and an exposure adjustment is made with a press of buttons 233 and 234.

The rear face of the imaging unit 3, as shown in Fig. 2, has an LCD button 321 for turning on or off the LCD 10, and a macro button 322. Pressing the LCD button 321 switches on or off the LCD display. In photographing which almost exclusively uses the optical viewfinder 31, for example, the LCD display may be turned off to conserve power. In macrophotography, an AF motor 308 (cf. Fig. 5) is driven with a press of the macro button 322, whereby the zoom lens 301 is enabled for macrophotography.

The camera body 2 has a DC input terminal 235 in its side face as shown in Fig. 3.

The camera body 2, as shown in Fig. 4, has a battery compartment 18 and a card compartment (card slot) 17 in the bottom. The card compartment 17 has two card slots 17a and 17b for mounting cards such as a memory card 91 and a function card 92 that expand the capabilities of card-loaded electronic equipment (e.g., digital camera 1). A clamshell cover 15 allows both the compartments to be freely opened and closed.

Herein, the "function card" refers to a card that serves as function add-on means for adding a predetermined function other than data storage to the electronic equipment (e.g., digital camera 1 in this preferred embodiment) in the form of hardware. More specifically, examples of the "function card" include an audio card, a video card, a modem card, an ISDN card, a USB card, an IEEE-1394 card, or any other card except memory cards. Fig. 4 illustrates that one memory card 91 and one function card 92 are inserted respectively in the card slots 17a and 17b. Concrete examples of such a function card will later be discussed in detail.

The cover 15 has an opening 15a so that a connector of the function card 92 inserted in either card slot would be exposed to the outside when the cover 15 is closed. This allows connection to external equipment with the cover 15 in its closed position.

The digital camera 1 uses, as its driving source, a power battery 236 (cf. Fig. 5) which is comprised of four series-connected AA cells loaded in the battery compartment 18. Of course, it is also possible to use adaptor-generated power supplied from the DC input terminal in Fig. 4.

Now, the internal construction of the imaging unit 3 is discussed step by step with reference to Fig. 5.

The imaging circuit 302 makes photoelectric conversions of an optical image of a subject, which is formed on the CCD 303 by the zoom lens 301, through the use of the CCD 303, and then outputs image signals of R (red), G(green), and B (blue) color components (a sequence of image signals received at each pixel).

On the digital camera 1, the diaphragm is fixed and thus the imaging unit 3 performs exposure control by adjusting the amount of light exposure in the CCD 303 (CCD 303's charge storage time corresponding to the shutter speed). If the shutter speed cannot be set properly during low subject brightness, incorrect exposure resulting from underexposure would be compensated by adjusting the levels of image signals outputted from the CCD 303. That is, the shutter speed (i.e., exposure time) and gain control are utilized in combination for exposure control in low-light conditions. The adjustment of the image signal levels is performed by an AGC (Automatic Gain Control) circuit in a signal processing circuit 313 which will be discussed later.

A timing generator 314 generates a drive control signal for the CCD 303 in step with the clock transmitted from a timing control circuit 202 in the camera body 2. The timing generator 314, for example, generates clock signals such as a timing signal for integral start/stop (i.e., exposure start/stop) and control signals (a horizontal synchronizing signal, a vertical synchronizing signal, a transfer signal, etc.) for readout of signals received at each pixel, and then outputs those signals to the CCD 303.

The signal processing circuit 313 performs predetermined analog signal processing on the image signals (analog signals) outputted from the imaging circuit 302. The signal processing circuit 313, which comprises a CDS (Correlative Doubled Sampling) circuit and the AGC circuit not shown, reduces noise in the image signals in its CDS circuit and adjusts the levels of those image signals by adjusting gain in its AGC circuit.

A light modulating circuit 304 controls the amount of light emission from the built-in flash 5 during flash photography to a predetermined amount determined by an overall control unit 211 in the camera body 2. In flash photography, the light modulating sensor 305 receives the reflected light of flash light from a subject at the same time as the start of exposure, and when the amount of light received reaches a predetermined amount of light emission, the light modulating circuit 304 outputs an emission stop signal through the overall control unit 211 to a flash control circuit 214 in the camera body 2. The flash control circuit 214, upon receipt of the emission stop signal, forcefully stops the emission of light from the built-in flash 5, whereby the amount of light emission from the built-in flash 5 is controlled to a predetermined amount.

The imaging unit 3 further comprises a zoom motor 307 for changing the zoom ratio for the zoom lens 301 and moving the lens between an encased position and a photo taking position, and the AF (Autofocus) motor 308 for focusing.

Now, the internal construction of the camera body 2 will be discussed.

The overall control unit 211, which is primarily comprised of a CPU, exercises control over photographing operations of the digital camera 1 by controlling drive functions of other components in the aforementioned imaging unit 3 and in the camera body 2, those components being connected with each other over address, data, and control buses.

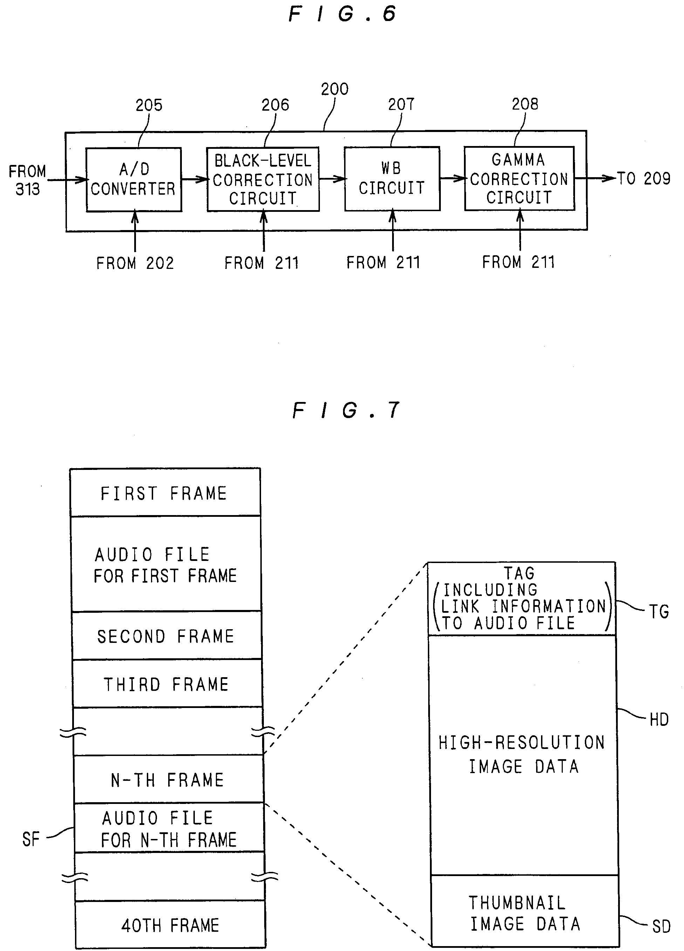

For convenience in drawing, flows of image data are indicated by the arrows between each component in Fig. 5 (and later Fig. 6); however, in practice, the image data is sent through the overall control unit 211 to each component. The overall control unit 211 thus contains a work RAM 211a comprised of DRAMs, and a flash ROM 211b for storing programs.

Next, the construction related to image signal processing and image display in the camera body 2 is discussed.

The analog image signals transmitted from the signal processing circuit 313 in the imaging unit 3 are subjected to various image processing in an image processing unit 200 in the camera body 2. Fig. 6 is a block diagram of the construction of the image processing unit 200. The analog image signals received at the image processing unit 200 are first converted by an A/D converter 205 into 10-bit digital signals on a pixel by pixel basis. The A/D converter 205 converts each pixel signal (analog signal) into a 10-bit digital signal in step with the clock given from the timing control circuit 202 for A/D conversion.

The timing control circuit 202 generates, under control of the overall control unit 211, a reference clock and the clocks given to the timing generator 314 and the A/D converter 205.

A black-level correction circuit 206 corrects the black level of the A/D-converted pixel signals (hereinafter referred to as "pixel data") to a reference black level. A WB circuit 207 makes level conversions of pixel data for each of the RGB color components, thereby to control white balance with consideration given to gamma correction which will be made in later steps. The white balance control is carried out with reference to a level conversion table (more precisely, data therein) which is fed to the WB circuit 207 from the overall control unit 211. The conversion factor (gradient of characteristics) for each color component in the level conversion table is determined by the overall control unit 211 on every captured image.

A gamma correction circuit 208 corrects gamma characteristics of the pixel data. The output from the gamma correction circuit 208 is sent to image memory 209 as shown in Fig. 5.

The image memory 209 is memory for storing the pixel data outputted from the image processing unit 200, which has a storage capacity of a single frame. More specifically, when the CCD 303 has an n by m matrix of pixels ("n" and "m" are natural numbers), the image memory 209 has a storage capacity of an n- by m-pixel matrix of image data for storing each pixel data in a corresponding storage area (address).

A VRAM 210 is buffer memory for image data being displayed on the LCD 10. The VRAM 210 has a storage capacity of image data corresponding to the number of pixels on the LCD 10.

With such a construction, during standby in the recording mode, each pixel data of images, which have been captured at predetermined intervals by the imaging unit 3, is processed by the image processing unit 200, stored in the image memory 209, and transferred through the overall control unit 211 to the VRAM 210 for display on the LCD 10 (live view display). This allows a user to visually identify a subject image by the image displayed on the LCD 10.

In the playback mode, images read out from a memory card are subjected to predetermined signal processing under control of the overall control unit 211 and then transferred to the VRAM 210 for display on the LCD 10. In displaying those images on the LCD 10, a back light 16 comes on under control of the overall control unit 211.

Next, the other components in the camera body 2 are discussed in an orderly manner.

A card I/F 212 is an interface for signal transmission and reception between various kinds of cards inserted in the card slots 17a and 17b. To be more specific, it reads and writes image data from and onto memory cards, and inputs and outputs image data or various kinds of signals from and to a variety of function cards. As has previously been described, the digital camera 1 of the present embodiment, having a dual card slot, can take two cards.

The flash control circuit 214, as has been described, is a circuit for controlling light emission from the built-in flash 5. Based on the control signals from the overall control unit 211, the flash control circuit 214 controls the presence or absence of light emission from the built-in flash 5, the amount and timing of light emission, and the like. It also controls the amount of light emission from the built-in flash 5 on the basis of the emission stop signal from the light modulating circuit 304.

A clock circuit 219 is a circuit for managing the date and time of photographing, which is driven by another power supply not shown.

The camera body 2 further comprises a zoom motor driving circuit 215 and an AF motor driving circuit 216 for driving the zoom motor 307 and the AF motor 308, respectively. These driving circuits operate under the control of an operating unit 250 which correspond to the shutter start button 8 and the above-described various kinds of switches and buttons.

The shutter start button 8, for example, is a two-position switch which can detect its half-pressed and pressed-in positions as adopted for cameras using silver halide films. When the shutter start button 8 is in its half-pressed position during standby, distance information is fed to the overall control unit 211 according to distancemeasuring information from the sensor 306. Then, under instructions from the overall control unit 211, the AF motor driving circuit 216 drives the AF motor 308, whereby the lens 301 is moved to its focused position.

With a press of the buttons 231 and 232, signals from these buttons are transmitted to the overall control unit 211, and under instructions from the overall control unit 211, the zoom motor driving circuit 215 drives the zoom motor 307. Thereby, the zoom lens 301 is moved to perform zooming.

So far, each component in the camera body 2 has been described. Besides timing control and data transmission/reception from/to each component, the overall control unit 211 can also achieve a variety of other functions in the form of software.

For example, the overall control unit 211 has a brightness judging function and a shutter-speed setting function both for determining the value of exposure control (shutter speed). The brightness judging function is for judging subject brightness utilizing images which have been captured at every 1/30 second by the CCD 303 and stored in the image memory 209. The shutter-speed setting function is for setting the shutter speed (integral time in the CCD 303) according to the result of judgment on the subject brightness from the brightness judging function.

The overall control unit 211 further has a filtering function, a recorded image generating function, and a playback image generating function all for recording of captured images.

The filtering function is for correcting high-frequency components of an image to be recorded through the use of a digital filter, thereby to correct image quality.

The recorded image generating function is for reading out pixel data from the image memory 209 to generate a thumbnail image and a compressed image both to be recorded on a memory card. To be more specific, the pixel data, while being scanned from the image memory 209 in the direction of raster scanning, is read out from the image memory 209 every 8 pixels in both lateral and longitudinal directions and transferred in sequence to the memory card, whereby a thumbnail image is produced and recorded on the memory card. In recording compressed image data on the memory card, on the other hand, all the pixel data are read out from the image memory 209 and subjected to predetermined JPEG compression such as two-dimensional discrete cosine transform (2D-DCT) and Huffman coding.

In one concrete operation, when photographing is executed with the shutter start button 8 in the recording mode, a thumbnail image and a compressed image which is compressed in the JPEG format at a preprogrammed compression rate are generated from the image stored in the image memory 209 after the execution of photographing, and then stored on the memory card along with tag information for that captured image (frame number, exposure value, shutter speed, compression rate, the date and time of photographing, flash on/off data at photo taking, scene information, the result of judgment about the image, and the like). A data format of the recorded images will be discussed later.

The playback image generating function is for decompressing the compressed image data recorded on the memory card to generate a playback image. In one concrete operation, when the mode selection switch 14 is placed in its playback mode, the image data with the highest frame number in the memory card is read out, decompressed, and transferred to the VRAM 210. Thereby, the LCD 10 shows the image with the highest frame number, i.e., the most recently captured image.

As shown in Fig. 5, for the digital camera 1 to take and use a variety of function cards 92 other than the memory card 91 in the card slots 17a and 17b, the overall control unit 211 should exercise control over each component as will be described later. Usually, control programs for such control have previously been installed on the flash ROM 21 lb in the overall control unit 211. Alternatively, it is also possible to insert in a card slot a setup memory card SM, which is a recording medium for recording control programs as above described and update programs for updating those control programs, and then to read and install those control and update programs from the setup memory card SM.

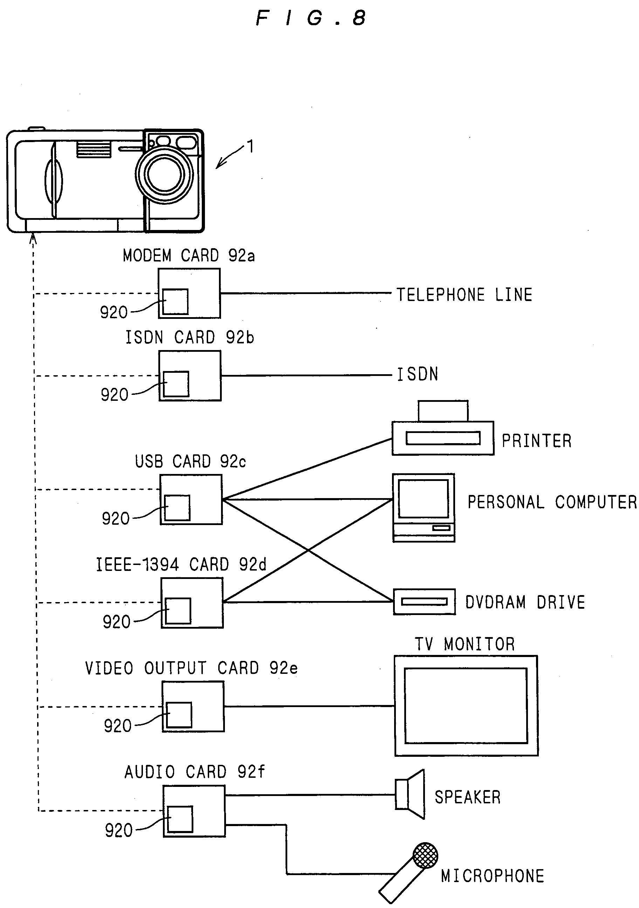

Fig. 7 shows a data array in a memory card. In the memory card, as shown in Fig. 7, the image of each frame recorded by the digital camera is sequentially stored in an array. Each frame holds tag information TG, high-resolution image data HD (1600- by 1200-pixel resolution) compressed in the JPEG format, and thumbnail image data SD (80- by 60-pixel resolution) for displaying a thumbnail image. Herein, a single frame of image data is approximately 1 MB. The digital camera according to this preferred embodiment can also record an audio file by loading an audio card. In this case, the tag information TG in the image file also describes link information (the start address of the storage area) which shows a link to the audio file. The audio file SF is stored in the area starting from the address indicated by the link information.

In this fashion, the digital camera of this preferred embodiment, when loading a memory card, can record and store images, and it can also store audio data, besides captured image data, through the use of an audio card, in which case a link is established between the audio data and the image data. That is, this digital camera can expand its capabilities by loading various kinds of cards.

Fig. 8 shows examples of the function cards connectable to the digital camera 1. Besides memory cards, the digital camera 1 can hold various kinds of function cards in the card slots for use.

More specifically, examples of the function cards include a modem card 92a for data communications over telephone lines, an ISDN card 92b for data communications over ISDN lines, a USB card 92c and an IEEE-1394 card 92d for connections to peripherals such as printers, PCs, and DVDRAM drives, which meet respectively the USB and IEEE-1394 standards, a video output card 92e for image display on external TV monitors, which will be described later, and an audio card 92f as above described. As will be discussed later with more specific examples, these function cards each comprise a flash ROM 920 for storing software drivers corresponding to a variety of electronic equipment (e.g., the digital camera 1).

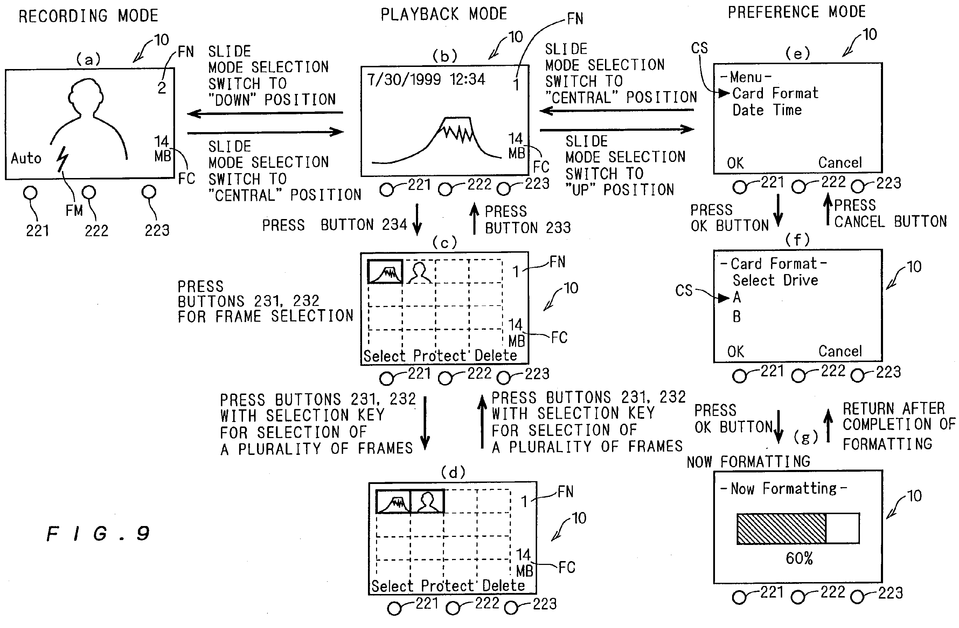

Fig. 9 is a state transition diagram of the LCD 10 screen when a memory card is inserted in the digital camera. This digital camera mainly has three modes of display on the LCD 10: the playback mode ((b), (c), (d) of Fig. 9) of displaying already-captured and recorded images on the memory card; the recording mode ( (a) of Fig. 9) of displaying live view images and being able to capture such images with a press of the shutter start button 8; and the preference mode ((e), (f), (g) of Fig. 9) of making a variety of predetermined settings which will be discussed later. In the case of Fig. 9, memory cards are inserted in both the card slots 17a and 17b (cf. Fig. 4).

The LCD screen in the recording mode displays a flash mode FM in the bottom left portion ((a) of Fig. 9), and a user can turn on and off the built-in flash 5 (cf. Fig. 5) with a press of the key switch 221. The screen also displays a frame number FN in the upper right corner and a free space FC of the memory card 91 in the lower right.

When the mode selection switch 14 is slid to its playback position (cf. Fig. 2) in the recording mode, the digital camera transitions to the playback mode. On the contrary, when the mode selection switch 14 is slid to its recording position in the playback mode, the digital camera transitions to the recording mode.

When the transition to the playback mode takes place, first of all, the first frame of high-resolution image recorded on the memory card is displayed ((b) of Fig. 9). If, in this condition, the button 234 (cf. Fig. 2) is pressed, a list of the thumbnail images is displayed on the screen. When the button 233 is pressed on the screen showing the list, a high-resolution image corresponding to a selected thumbnail image is displayed. When the display is as shown in (c) of Fig. 9, a plurality of frames can be selected by pressing the buttons 231 and 232 (cf. Fig. 2) together with the selection key, i.e., the key switch 221 ((d) of Fig. 9).

When the mode selection switch 14 is slid to its preference position (cf. Fig. 2) in the playback mode of displaying a high-resolution image ((b) of Fig. 9), the digital camera transitions to the preference mode ((e), (f), (g) of Fig. 9). The initial screen in the preference mode ((e) of Fig. 9) displays a list of items (setting items). On the screen (e) of Fig. 9, a user can select either the format of a memory card or the settings of date and time. When a cursor CS is moved to an item to be selected with a press of the buttons 233 and 234 (cf. Fig. 2) and then the OK button (key switch 221) is pressed, a list of items (selection items) which are setting options to be selected for each item (setting item) is displayed on the screen.

In the case of Fig. 9, the format of a memory card is selected on the screen (e). On the screen (f), therefore, either the drive A or B corresponding to the card slot 17a, 17b (cf. Fig. 4) is selected by moving the cursor as above described and the OK button (key switch 221) is pressed for formatting of the selected drive. After the formatting is complete, the screen returns to its previous state ((f) of Fig. 9). When the settings of date and time are selected, the date and time can be set to the clock circuit. Now, a card insertion operation in the digital camera will be discussed.

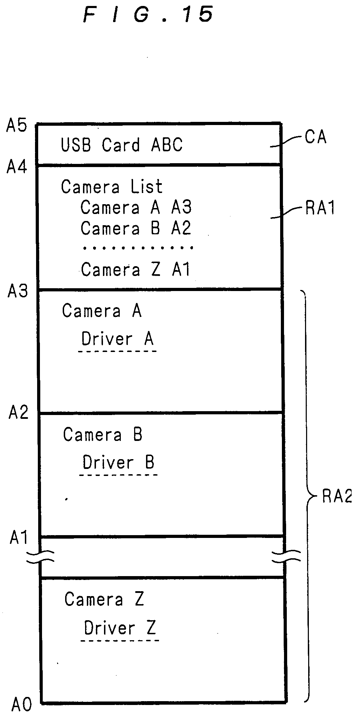

In Fig. 5, the overall control unit 211 sends detecting signals to both the card slots 17a and 17b at predetermined intervals. With no card inserted in the card slots 17a and 17b, no response to the detecting signals comes back. With any card inserted in the card slot 17a or 17b, on the other hand, an acknowledgement signal for the detecting signals comes back to the overall control unit 211. Upon detection of such an acknowledgement signal, the overall control unit 211 senses that any card is inserted in the card slot 17a or 17b. After detecting card insertion, the overall control unit 211 determines the card type. Herein, any card holds its own card type in its ROM (which will be discussed later in conjunction with Fig. 15).

By the way, the digital camera 1 does not comprise large-capacity nonvolatile storage means for storing captured images; therefore, at least one memory card must be inserted in the card slot 17a or 17b. With no memory card inserted, a warning is displayed on the screen.

The digital camera 1 is designed to be able to use a variety of function cards. However, for the digital camera 1 to use any kind of function cards, a software driver for that function card must previously be installed in the digital camera, or the function card itself must hold a software driver corresponding to that digital camera in its own ROM for later installation. Otherwise, warnings are displayed on the screen.

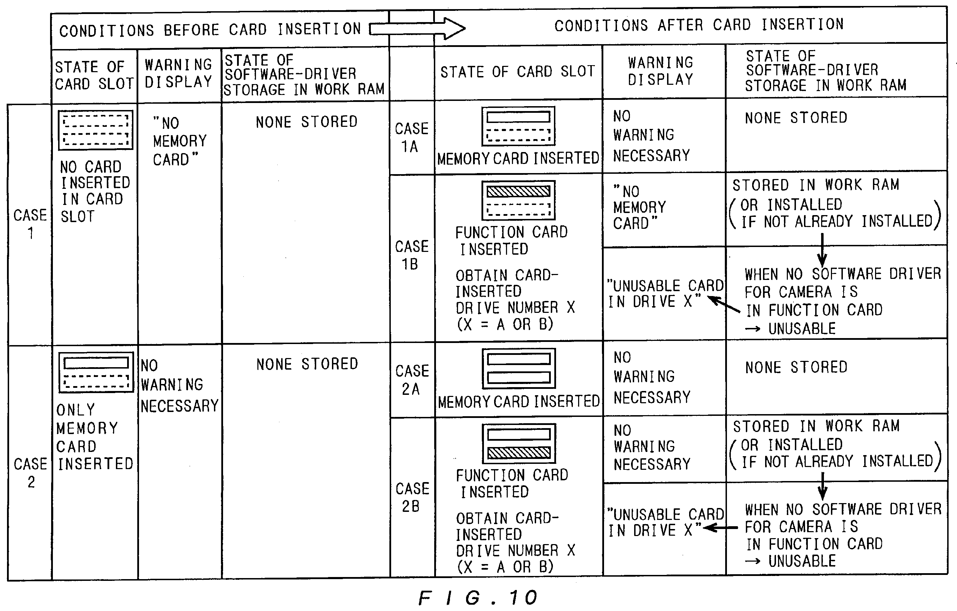

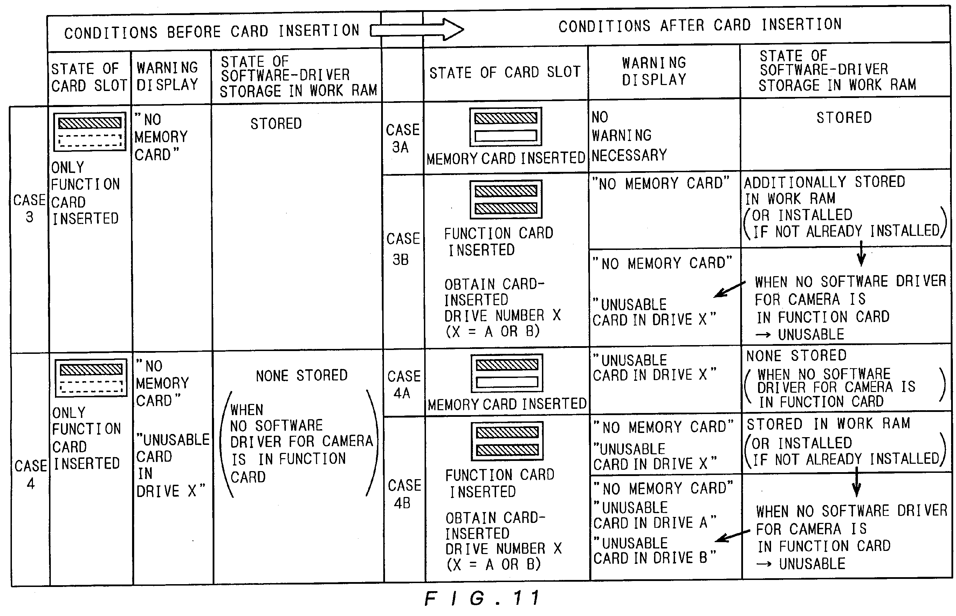

Now, more concrete descriptions will be given. Figs. 10 and 11 illustrate the card insertion operation. The case 1 is where no card is inserted in the card slots before card insertion and thus a warning indicating that no memory card is inserted (hereinafter referred to as a "warning for no memory card") is displayed on the LCD.

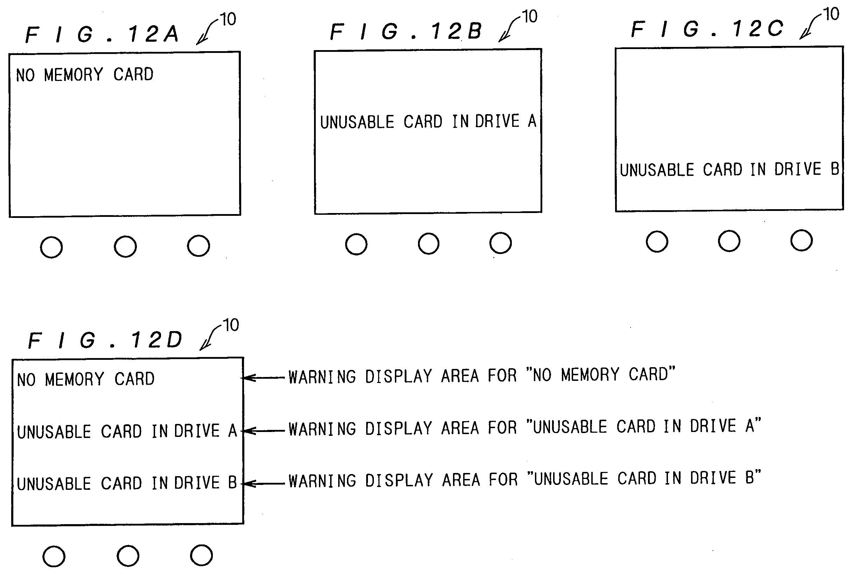

Figs. 12A to 12D show warning display screens on the LCD 10. With no memory card inserted, the warning as shown in Fig. 12A is displayed on the LCD 10. In this case, of course, no function card is inserted. Thus, the work RAM 21 la (cf. Fig. 5) in the digital camera holds no software driver to be executed.

When, in this condition, one memory card is inserted in either of the card slots as in the case 1A, no warning becomes necessary since the memory card is present although no function card is inserted. In this case, no software driver will be stored in the work RAM. On the other hand, when in the case 1 one function card is inserted as in the case 1B, the warning for no memory card is displayed and, if the software driver for that function card has already been installed, that software driver is stored in the work RAM for execution. This changes the items displayed in each mode as will be discussed later. More specifically, a display program for each display mode is rewritten and executed in the work RAM.

When no software driver has been installed yet, the overall control unit searches through the flash ROM in the function card. If the ROM holds a software driver corresponding to that digital camera (electronic equipment) (such a software driver is hereinafter referred to as a "corresponding software driver"), that corresponding software driver is installed and stored in the work RAM. With no corresponding software driver in the ROM, on the other hand, the function card cannot be used since no software driver can be stored in the work RAM. Accordingly, a warning which indicates that the function card inserted in that drive (card slot) is unusable (hereinafter referred to as a "warning for unusable card") is displayed as shown in Fig. 12B or 12C.

The case 2 is where one memory card is in either of the card slots before card insertion and thus no warning is displayed on the LCD. Since no function card is inserted in this case, the work RAM in the digital camera holds no software driver to be executed.

When, in this condition, another memory card is inserted in a free card slot as in the case 2A, neither the warning for no memory card nor any other warning is displayed because of the absence of function cards.

When, in the case 2, a function card is inserted as in the case 2B, the warning for no memory card is not displayed. If the software driver for that function card has already been installed or is ready for installation, that software driver either directly or after installation is stored and executed in the work RAM. Thereby the items displayed in each mode are changed as will be discussed later. More specifically, the display program for each display mode is rewritten and executed.

When the software driver has not been installed yet and the function card cannot be used, the warning for unusable card is displayed as in the case 1 B.

The case 3 is where one function card is in either of the card slots with no memory card before card insertion, and thus the warning for no memory card is displayed on the LCD. In this case, if the inserted function card complies with the camera and its corresponding software driver has already been installed, the work RAM in the digital camera stores and executes that software driver.

When, in this condition, a memory card is inserted in a free card slot as in the case 3A, the warning display for no memory card is turned off and no other warning is displayed since the function card is usable.

When, in the case 3, another function card is inserted as in the case 3B, the warning for no memory card is displayed. If the software driver for that function card has already been installed or is ready for installation, that software driver either directly or after installation is stored and executed in the work RAM. Thereby the items displayed in each mode are changed as will be discussed later.

When the software driver has not been installed yet and the function card cannot be used, the warning for unusable card is displayed as in the case 1B.

The case 4 is where one function card is in either of the card slots with no memory card before card insertion. Herein, the function card shall be unusable. In this case, both the warning for no memory card and the warning for unusable card are displayed on the LCD.

When, in this condition, a memory card is inserted in a free card slot as in the case 4A, the warning display for no memory card is turned off but the warning for unusable card remains on display.

When, in the case 4, another function card is inserted as in the case 4B, the warning for no memory card remains on display. If the software driver for the added function card has already been installed or is ready for installation, that software driver either directly or after installation is stored and executed in the work RAM. Thereby the items displayed in each mode are changed as will be discussed later.

When the software driver for the added function card has not been installed yet and that function card cannot be used, the warnings for unusable card in both the drives A and B are displayed (Fig. 12D). For example, with the USB card and the audio memory card inserted at the same time, the warnings as shown in Fig. 12D are displayed.

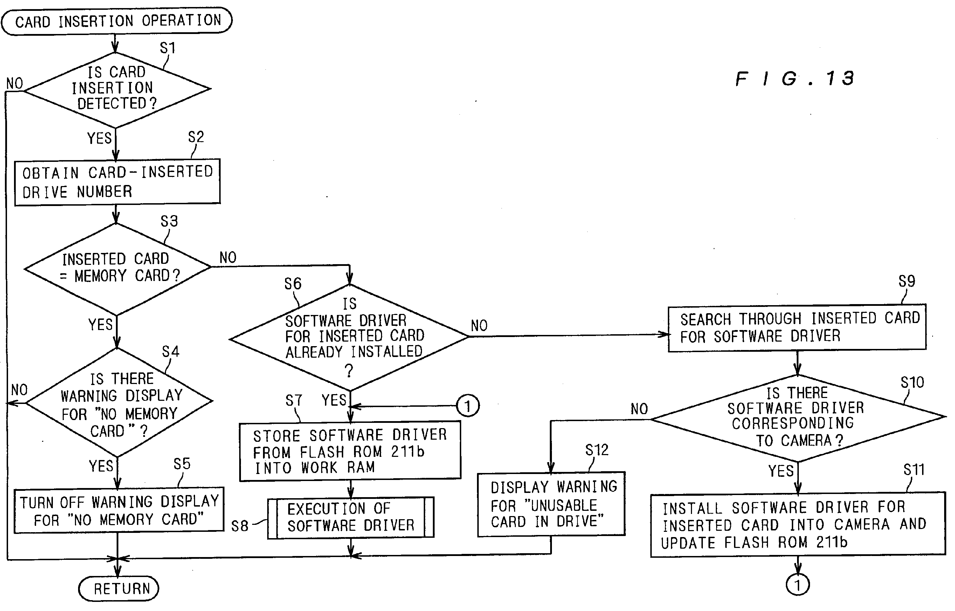

For the aforementioned operation, the overall control unit controls each component through the following procedures. Fig. 13 is a flow chart illustrating control procedures in the overall control unit.

Referring to Fig. 13, as a first step, card insertion is detected (step S1). With no card inserted, the overall control unit exits from this routine. As has been described, this routine is repeated at predetermined intervals. When the card insertion is detected, a card-loaded drive number is obtained (step S2). Further, whether the inserted card is a memory card or not is determined (step S3).

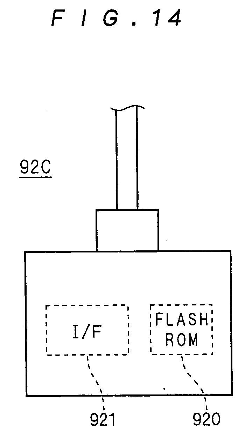

Now, take the USB card as an example of the function cards. Fig. 14 shows the structure of the USB card. The USB card comprises an interface chip (expansion means) 921 and a built-in flash ROM 920 for storing a plurality of software drivers corresponding to a variety of digital cameras (electronic equipment).

Fig. 15 shows storage areas for software drivers in the flash ROM built in the USB card. The flash ROM in the USB card shown in Fig. 15 describes the type of this card, i.e., indicates that this card is a USB card "ABC", at addresses A4-A5 which form a card type storage area CA. At addresses A4-A3 which form a first storage area RA1, a model list (camera A, camera B, ...) of digital cameras (electronic equipment) that comply with this card (i.e., which store software drivers for this card) is described. At addresses A3-A0 which form a second storage area RA2, a software driver for the camera A is stored at addresses A3-A2, a software driver for the camera B at addresses A2-A1, and so on. That is, a corresponding software driver for each camera is stored.

The first storage area RA1 also stores start addresses corresponding to the respective camera models (the start address A3 for the camera A, the start address A2 for the camera B, and so on), which specify storage locations of the software drivers for the respective models in the second storage area RA2.

In step S3, whether the inserted card is a memory card or not is determined by reading the card type described in the card type storage area CA (addresses A4-A5).

Referring back to Fig. 13, when the inserted card is judged as being a memory card in step S3, whether the warning for no memory card is being displayed or not is determined (step S4). When the warning display for no memory card is not displayed, the process returns to step S1. With the warning for no memory card on display, on the other hand, that warning display is turned off since the memory card is inserted (step S5).

When the inserted card is a card other than memory cards (i.e., function card) according to the judgment in step S3, it is checked whether a corresponding software driver for that newly-inserted card has already been installed in the flash ROM in the digital camera (step S6).

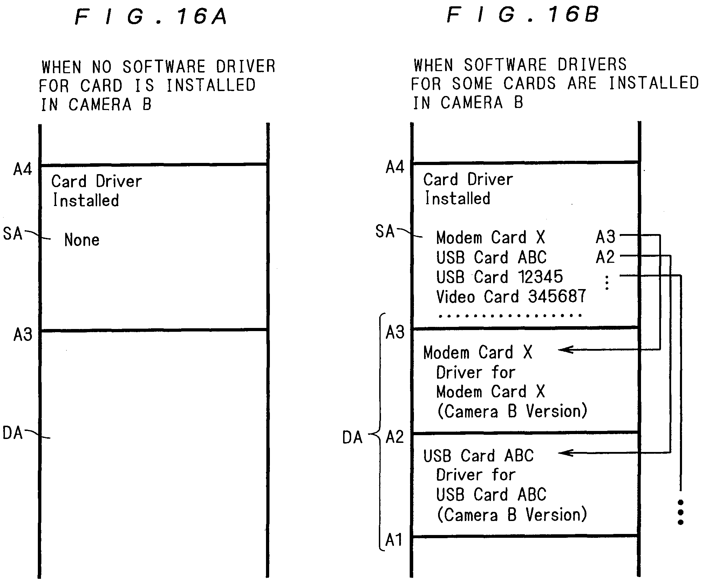

Figs. 16A and 16B show how software drivers are recorded in the flash ROM 211b (cf. Fig. 5) in the digital camera 1. Fig. 16A shows the case where no software driver corresponding to the digital camera is installed, and Fig. 16B shows the case where several software drivers corresponding to the digital camera are installed.

When there is no software driver for function cards installed in the camera B (corresponding to the digital camera 1 (cf. Figs. 1 to 5)), the contents of the flash ROM 211b (cf. Fig. 5) in the digital camera is as shown in Fig. 16A.

On the other hand, when there are software drivers for several function cards installed in the camera B as shown in Fig. 16B, a list of card types whose corresponding software drivers have already been installed and start addresses which specify storage locations of those corresponding software drivers are stored at addresses A3-A4 which form a type storage area SA. Also, the software drivers named in the type storage area SA are stored respectively at addresses A3, A2, A1, ... which form a driver storage area DA.

In the example of Fig. 16B, a software driver for a modem card "X" is stored at addresses A2-A3 and a software driver for the USB card "ABC" at addresses A1-A2. In this way, the types of cards whose software drivers have already been installed can be identified by referring to the type storage area SA (addresses A3-A4).

Referring back to Fig. 13, when the corresponding software driver has already been installed, that software driver is stored and executed in the work RAM (step S7). Thereby, the inserted card becomes usable and the display in each mode of the digital camera, especially the items, is changed (step S8).

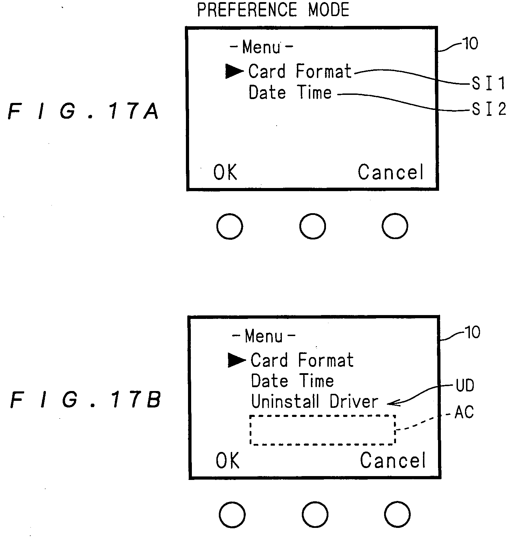

Figs. 17A and 17B show the preference mode screen on the LCD 10 when a card is inserted. Fig. 17A shows the screen with no software driver for function cards installed, and Fig. 17B shows the screen with a software driver for a function card installed. When any function card is inserted, additional items corresponding to that function card are displayed in an additional display field AC. The display also shows the items SI1 and SI2 being displayed in the preference mode at the time of insertion of only two memory cards with no function card as shown in Fig. 9. At the same time, an uninstall setting item UD for uninstallation of the software driver is also displayed.

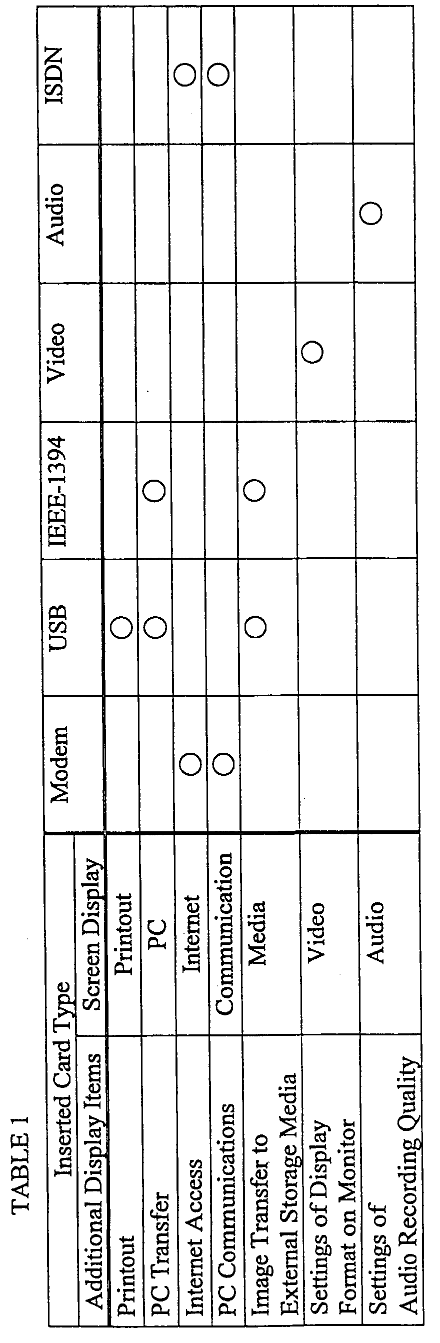

Table 1 lists additional display items on the preference mode screen for each type of function cards when inserted. The table gives, as examples of the function cards, the modem card, the USB card, the IEEE-1394 card, the video output card, the audio card, and the ISDN card. The additional display items include "printout", "transfer to personal computers", "access to the Internet", "personal computer communications", "image transfer to external storage media such as hard disks and CD-ROMs", "settings of the display format such as NTSC and PAL on the external monitor", and "settings of audio recording quality such as radio and CD". On the LCD 10 display (cf. Fig. 2), the above additional display items are simplified, namely, "Printout", "PC", "Internet", "Communication", "Media", "Video", and "Audio".

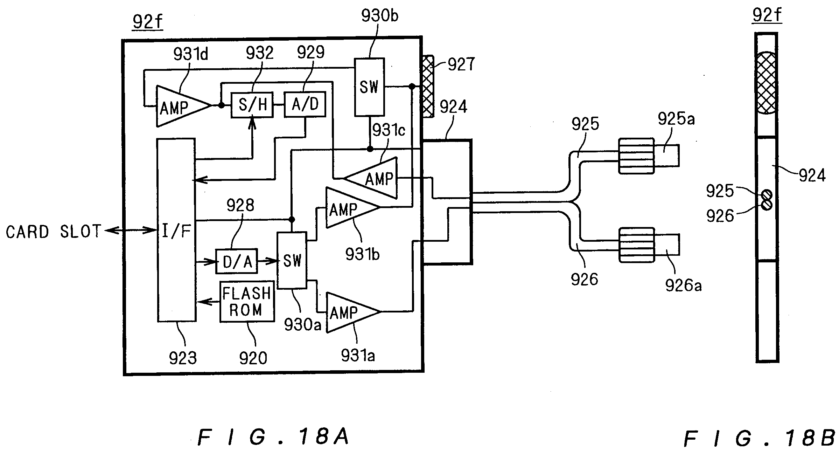

Figs. 18A and 18B show the structure of the audio card 92f. Fig. 18A shows an internal structure thereof and Fig. 18B shows a partial cross-section thereof when viewed from the side. The audio card 92f comprises an interface 923 to be inserted in the card slots of electronic equipment such as a digital camera. On the other side of the interface, a connector 924 is provided from which an input cable 925 and an output cable 926 extend respectively to the outside with an input jack 925a and an output jack 926a at their respective ends. There is further provided a microphone speaker 927 adjacent to the connector 924. The audio card 92f is a card for audio recording/output on/from card-loaded electronic equipment (e.g., digital camera 1). Besides the interface 923, the audio card 92f further comprises a D/A converter 928, an A/D converter 929, switches 930a and 930b, amplifiers 93la to 931d, a sample-and-hold circuit 932 for sampling of analog signals, and the flash ROM 920.

With this audio card 92f inserted in electronic equipment (e.g., the digital camera 1), a user can input audio data obtained through the microphone speaker 927 in the electronic equipment; output from the microphone speaker 927 audio file data which has been stored on the memory card inserted in the electronic equipment; input an audio file from the input jack 925a into the electronic equipment; and output an audio file, which has been stored on the memory card inserted in the electronic equipment, from the output jack 926a to external equipment. The selection of these functions is done by the overall control unit in the electronic equipment (the overall control unit 211 in the digital camera 1; cf. Fig. 5) making the switching between the switches 930a and 930b. The overall control unit in the electronic equipment also exercises the control of a sampling rate of sampling signals which are fed to the sample-and-hold circuit 932.

The flash ROM 920 is connected with the interface 923. Further, the flash ROM 920 stores software drivers, which comply with a variety of electronic equipment (e.g., digital camera 1), for the audio card 92f. The use of memory spaces in the flash ROM 920 is of nearly identical with that in the USB card shown in Fig. 15. That is, the flash ROM 920 has the card type storage area (describing the type of that audio card), the first storage area for recording a model list of electronic equipment (e.g., digital camera 1) and start addresses that specify storage locations of software drivers corresponding to the respective models, and the second storage area for storing those software drivers corresponding to the respective models of electronic equipment. When the audio card 92f is inserted in electronic equipment, the overall control unit in that electronic equipment searches through the flash ROM 920, and when finding a corresponding software driver in the ROM 920, the overall control unit reads and installs that software driver.

The components other than the flash ROM 920 of the audio card 92f correspond to expansion means for expanding the capabilities of electronic equipment (e.g., the digital camera 1) where the audio card 92f is inserted.

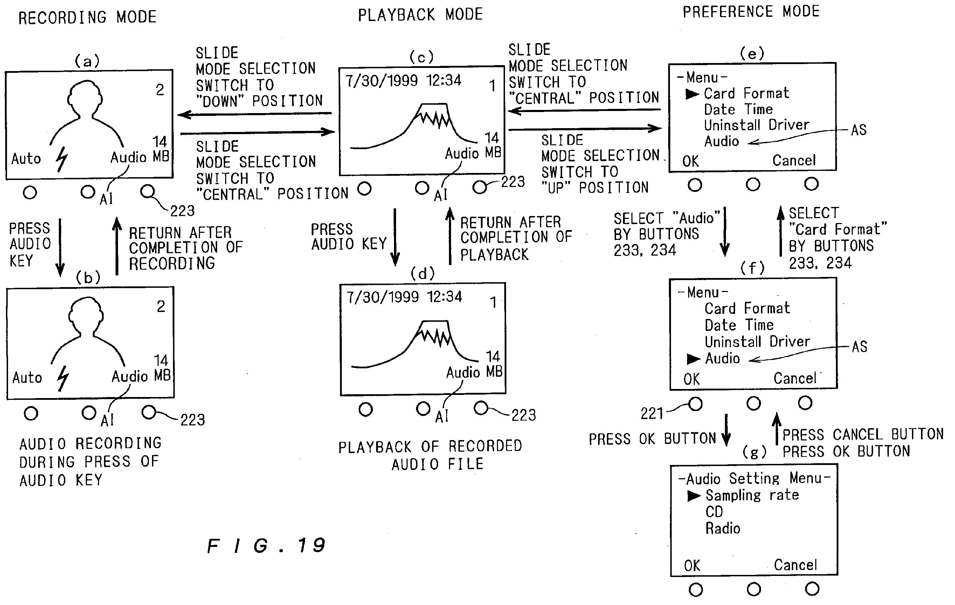

Fig. 19 shows each display mode when the audio card is inserted. As shown in (a) to (d) of Fig. 19, with the audio card inserted, the LCD screen in the recording and playback modes displays an additional item AI ("Audio") in the lower right portion in contrast to the screen with only a memory card inserted (Fig. 9). By inputting audio signals from the audio card with a press of the audio key (key switch 223), a user can record audio data on the memory card. More specifically, after pressing the shutter start button, a user can record the date, time, and place of photographing through the microphone speaker with a press of the audio key. Thereby, an audio file SF is produced and link information is recorded at the tag of a most recently captured image file.

As in the case with only the memory card inserted, the transition to the playback mode as shown in (c) and (d) of Fig. 19 is effected by the mode selection switch 14 (cf. Fig. 2). In the playback mode, when the image being displayed comes with audio data, the item AI ("Audio") is displayed in the lower right portion of the screen, and that audio data can be played back with a press of the audio key.

Further as in the case with only the memory card inserted, the transition to the preference mode as shown in (e) to (g) of Fig. 19 is effected by the mode selection switch 14. In this case, as shown in (e) and (f) of Fig. 19, an additional item AS ("Audio") is displayed in the aforementioned additional display field. That is, only the items for the functions available with the audio card are additionally displayed. With a press of the button 233 or 234 (cf. Fig. 2) as in the case with only the memory card inserted, a user can move up or down the cursor CS displayed on the preference mode screen to select either of the items. When the cursor CS is placed at the item "Audio" ((f) of Fig. 19) and the OK button (key switch 211) is pressed, a list of items (setting items) for audio quality, i.e., sampling rate, appears on the screen as shown in (g) of Fig. 19. That is, this screen shows only a list of selection items corresponding to the functions available with the audio card (e.g., recordable sampling rate). On this screen, a user can select and set a desired sampling rate (CD or radio audio quality in (g) of Fig. 19). After the selection of the sampling rate, audio recording with the selected sampling rate (audio quality) becomes possible.

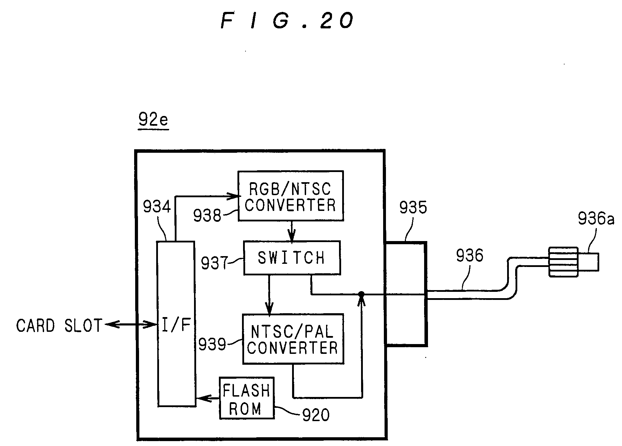

Fig. 20 shows the internal structure of the video output card 92e. The video output card 92e comprises an interface 934 on the side to be inserted in the card slots of electronic equipment such as the digital camera 1, and a connector 935 on the other side from which an output cable 936 extends to the outside with an output terminal 936a at its end. The video output card 92e is a card for video output from card-loaded electronic equipment (e.g., the digital camera 1). Besides the interface 934, the video output card 92e further comprises a switch 937, an RGB/NTSC converter 938, an NTSC/PAL converter 939, and the flash ROM 920.

The video output card 92e can acquire RGB signals from electronic equipment (e.g., digital camera 1) through the interface 934 and output video signals in the NTSC or PAL format. The control of the switch 937 for selecting the format of output signals is exercised by the overall control unit in the electronic equipment (the overall control unit 211 in the digital camera 1; cf. Fig. 5).

The flash ROM 920 is connected with the interface 934. Further, the flash ROM 920 stores software drivers, which comply with a variety of electronic equipment (e.g., digital camera 1), for the video output card 92e. The use of memory spaces in the flash ROM 920 is also of nearly identical with that in the USB card shown in Fig. 15. That is, the flash ROM 920 has the card type storage area (describing the type of that video output card), the first storage area for recording a model list of electronic equipment (e.g., the digital camera 1) and start addresses that specify storage locations of software drivers corresponding to the respective models, and the second storage area for storing those software drivers corresponding to the respective models of electronic equipment. When the video output card 92e is inserted in electronic equipment, the overall control unit in that electronic equipment searches through the flash ROM 920, and when finding a corresponding software driver in the ROM 920, the overall control unit reads and installs that software driver.

The components other than the flash ROM 920 of the video output card 92e correspond to expansion means for expanding the capabilities of electronic equipment (e.g., the digital camera 1) where the video output card 92e is inserted.

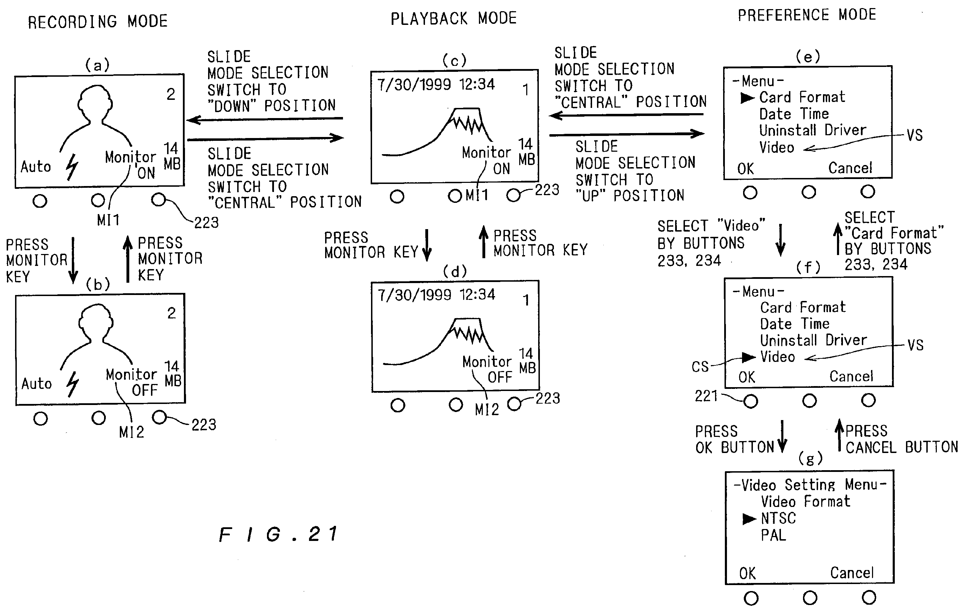

Fig. 21 shows each display mode when the video output card is inserted. As shown in (a) to (d) of Fig. 21, with the video output card inserted, the LCD screen in the recording and playback modes displays an additional item MI1 ("Monitor ON") in the lower right portion in contrast to the screen in the case with only a memory card inserted (Fig. 9). With a press of the monitor key (key switch 223) in the recording mode ((a) of Fig. 21), video signals of the image being displayed on the LCD are outputted from the video output card, whereby the same captured image as being displayed on the LCD is displayed on the external monitor and an item MI2 ("Monitor OFF") is displayed in the lower right portion of the screen ((b) of Fig. 21). With a re-press of the monitor key in that condition ((b) of Fig. 21), the output of the video signals stops, the image on the external monitor disappears, and the display item MI1 ("Monitor ON") is displayed in the lower right portion of the LCD screen.

As in the case with only the memory card inserted, the transition to the playback mode as shown in (c) and (d) of Fig. 21 is effected by the mode selection switch 14 (cf. Fig. 2). In this case, by outputting video signals, the same display as on the LCD can be shown on the external monitor. At this time, the key operation and the display of the items MI1 and MI2 ("Monitor ON/OFF") are similarly performed as in the recording mode.

Further as in the case with only the memory card inserted, the transition to the preference mode as shown in (e) to (g) of Fig. 21 is effected by the mode selection switch 14. In this case, as shown in (e) and (f) of Fig. 21, an additional item VS ("Video") is displayed in the aforementioned additional display field. That is, only the items corresponding to the functions available with the video output card are additionally displayed. With a press of the button 233 or 234 (cf. Fig. 2) as in the case with only the memory card inserted, a user can move up or down the cursor CS displayed on the preference mode screen to select either of the items. When the cursor CS is placed at the item VS, i.e., "Video", ((f) of Fig. 21) and the OK button (key switch 211) is pressed, a list of items (selection items) for display format on the external monitor appears on the screen as shown in (g) of Fig. 21. That is, this screen shows only a list of selection items corresponding to the functions available with the video output card (i.e., available display formats). On this screen, a user can select and set a desired display format (NTSC or PAL format in (g) of Fig. 21). After the selection of the display format, the user returns the digital camera to the recording or playback mode, in which mode video signals of the displayed image on the LCD are transferred to and displayed on the external monitor in the selected display format.

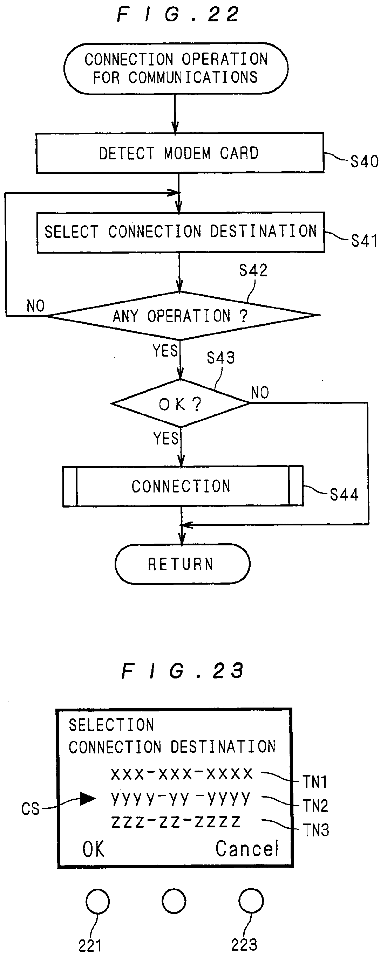

Fig. 22 is a flow chart of a connection operation for communications using the modem card 92a (cf. Fig. 8). Now, the procedures of connection for communications will be discussed.

First, in the playback mode, the overall control unit 211 detects insertion of a modem card in the card slot (step S40).

The insertion of a modem card immediately causes an automatic transition to a connection mode for communications, unlike insertion of other function cards in the card slot. This mode corresponds to the preference mode for the modem card.

Then, a connection destination is selected (step S41). Fig. 23 shows a connection destination selection screen when a modem card is inserted. As shown, the screen displays a list of telephone numbers TN1 to TN3 (items) of predetermined connection destinations. On this screen, a user presses the button 233 or 234 to move and place the cursor CS at a telephone number of a desired connection destination and then presses the OK button (key switch 221) for confirmation or the cancel button (key switch 223) for the cancellation of connection. When the overall control unit 211 (cf. Fig. 5) in the digital camera 1 detects that operation (i.e., when any operation is detected in step S42), then whether that operation is the press of the OK button or not is checked (step S43). When the OK button is pressed, connection is made (step S44). Otherwise, the digital camera 1 returns to the playback mode without connection.

In this fashion, the LCD display and especially the displayed items vary according to the type of cards inserted.

Now referring back to Fig. 13, when a software driver for the inserted card has not been installed yet in the camera, a search is conducted for software drivers in that card (step S9).

As has been discussed in conjunction with Fig. 15, every function card described in this preferred embodiment stores software drivers corresponding to a variety of electronic equipment in its own built-in flash ROM. This is because different kinds of electronic equipment often use different CPUs (the overall control unit in this preferred embodiment), and even if using the same CPU, they may use different operating systems (OS).

Here, it would be inadvisable for cameras to preinstall software drivers for a variety of cards other than memory cards, especially the function cards, because such installation would increase the volume of firmware of the electronic equipment and makes it difficult for the electronic equipment to be ready for upgrades of those cards and for newly-released cards.

Therefore, as have been described, every card described in this preferred embodiment holds its own software drivers so that those software drivers can be installed and used in the electronic equipment as necessary.

In such cases, every card prepares a plurality of software drivers corresponding to a variety of typical electronic equipment and select a software driver to be installed depending on the type of electronic equipment where it is inserted. This is due to the fact that different kinds of electronic equipment usually use different CPUs (the overall control unit in this preferred embodiment) and, even if using the same CPU, they usually use different operating systems (OS).

For this reason, in step S9, a search is conducted through the flash ROM in the card for software drivers corresponding to the electronic equipment.

Then, the presence or absence of a software driver corresponding to concerned electronic equipment (digital camera 1 in this example) is judged (step S10). In the absence of a corresponding software driver, the warning for unusable card is displayed on the LCD (step S12). More specifically, when the card inserted in the drive A out of the two card slots is unusable, the warning as shown in Fig. 12B is displayed; and when the card inserted in the card slot or drive B is unusable, the warning as shown in Fig. 12C is displayed. When the cards in both the drives are unusable, the above warnings are displayed in combination as shown in Fig. 12D. In this fashion, warning display includes the card-loaded drive number. This allows a user to immediately identify which of the cards inserted in the card slots is incompatible.

In the presence of a software driver corresponding to the electronic equipment, on the other hand, that software driver is installed (step S11). The flash ROM in the digital camera after installation is as shown in Fig. 16B.

Accordingly, even if a card inserted is a function card, the function card can serve its own function and the items corresponding to the type of that function card are displayed in each mode.

By the way, the digital camera according to this preferred embodiment can uninstall unnecessary software drivers which had been installed.

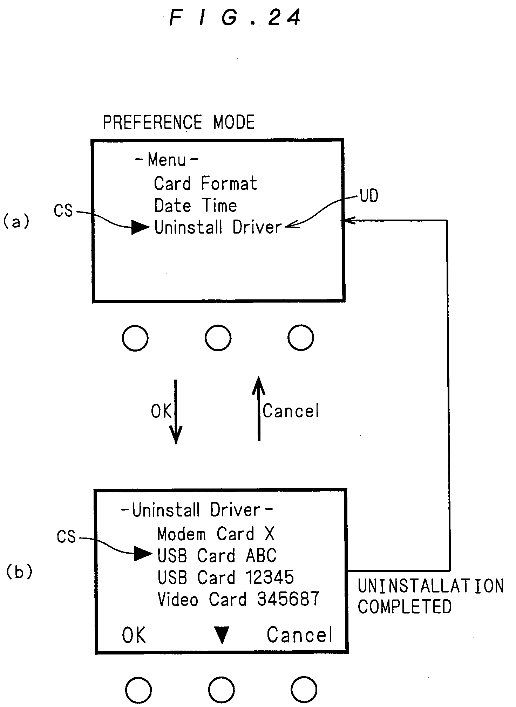

Fig. 24 shows the preference mode screen at the time of uninstallation of software drivers. As shown in (a) of Fig. 24, when a user moves the cursor CS to select the software-driver uninstall setting item UD in the preference mode and presses the OK button, a list of already-installed software drivers is displayed as items (selection items) as shown in (b) of Fig. 24. On this screen, when the user moves the cursor CS to select a software driver to be uninstalled and presses the OK button, uninstallation is carried out and then the display returns to the initial preference mode screen. Although not shown in (a) of Fig. 24 which shows the case of the USB card, the additional display field AC (cf. Fig. 17) as has been described may further be displayed on the preference mode screen depending on the types of function cards.

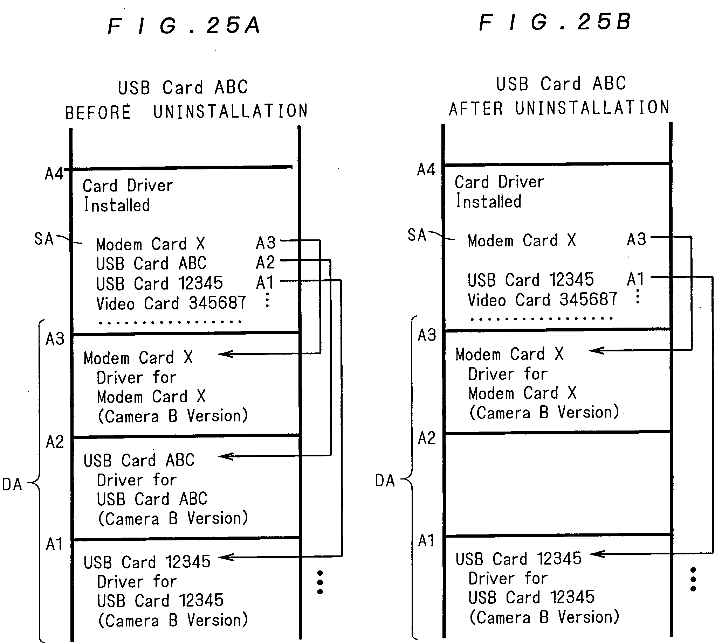

Figs. 25A and 25B show how to uninstall a software driver in the flash ROM 211b (cf. Fig. 5) in the digital camera 1. Fig. 25A shows the state before uninstallation and Fig. 25B shows the state after uninstallation. In the case of Figs. 25A and 25B, the USB card "ABC" is to be uninstalled.

As has been described, the flash ROM in the digital camera has the type storage area SA and the driver storage area DA. When uninstallation is requested, the overall control unit 211 (cf. Fig. 5) searches through the type storage area SA for the start address (address A2) of a software driver for a target function card, in this case the USB card "ABC", and then performs uninstallation such as deleting from the driver storage area DA a software driver stored at addresses starting from the retrieved start address (address A2). In the drawings, the software driver for the USB card "ABC" which had been stored as shown in Fig. 25A is deleted as shown in Fig. 25B.

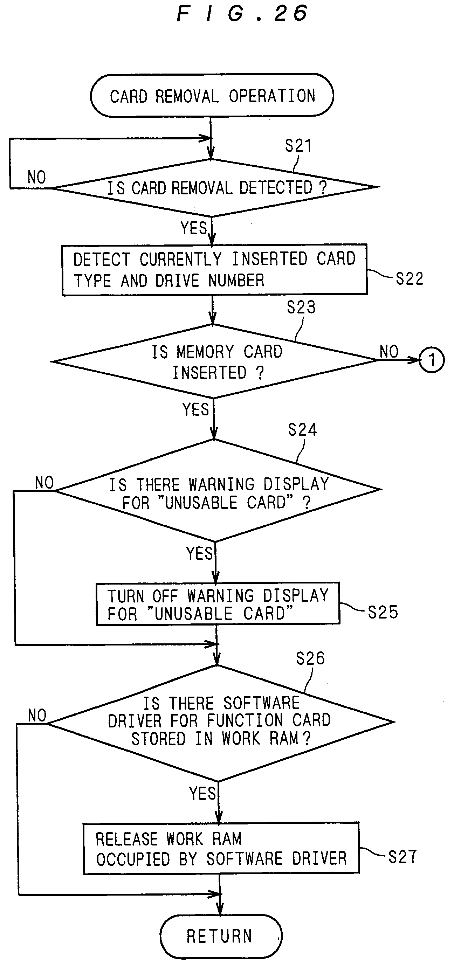

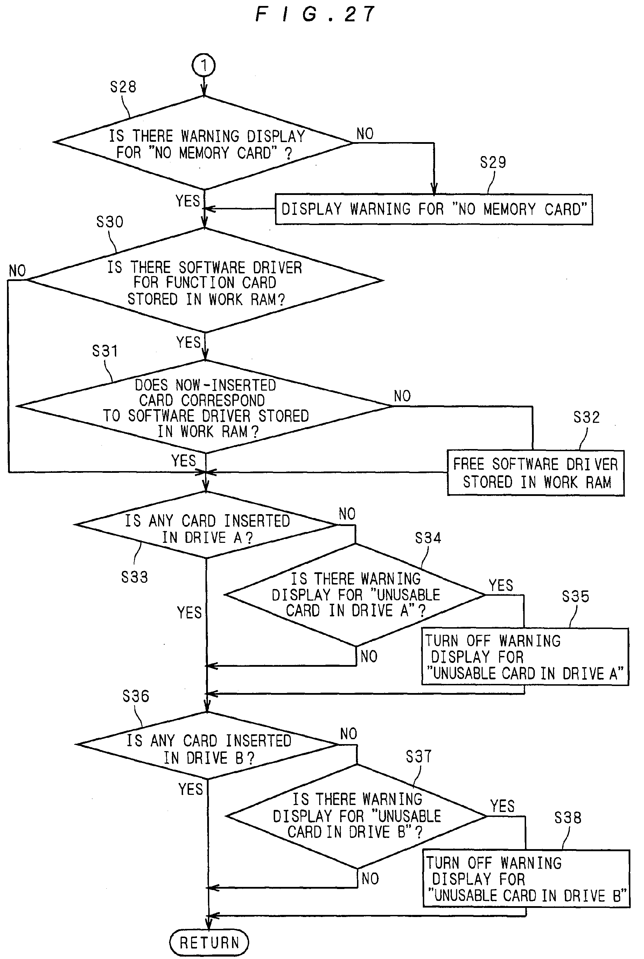

Figs. 26 and 27 are flow charts of a card removal operation.

Referring to Fig. 26, as a first step, card removal is detected (step S21).

After removal of the card, the type of a currently inserted card and a card-loaded drive number are detected (step S22). According to the result of detection, whether any memory card is currently being inserted or not is determined (step S23). With no memory card inserted, the process goes to step S28 (Fig. 27).

When any memory card is currently being inserted, on the other hand, whether the warning for unusable card against a function card, as above described, is being displayed or not is checked (step S24). When such a warning for unusable card is not on display, the process directly goes to step S26. With such a warning on display, on the other hand, that warning display is turned off because only the memory card is currently being inserted (step S25).

Then, whether the software driver for any function card remains in the work RAM or not is determined (step S26). If there is any, the area of the work RAM which has been occupied by the software driver is released (step S27). With no software driver left or after the completion of the release of the software driver in step S27, the card removal operation is completed.

Referring to Fig. 27, when no memory card is inserted in step S23, whether the warning for no memory card is, in this condition, being displayed or not is checked (step S28). With no such a warning on display, the warning for no memory card is displayed (step S29).

When the warning for no memory card is being displayed or after the display of such a warning in step S29, the presence or absence of a software driver for a function card in the work RAM is determined (step S30). When there is no software driver stored, the process goes to step S33. When there is any, on the other hand, whether or not the currently inserted card correspond with the software driver stored in the work RAM is determined (step S31). If they correspond with each other, the process goes to step S33; and when they do not, the area of the word RAM which has been occupied by the software driver is released (step S32).

Then, whether any card is inserted in the drive A or not is checked (step S33). With any card inserted, the process goes to step S36.

With no card in the drive A, on the other hand, and only the warning for unusable card against the drive A remaining on display, that warning display is turned off (steps S33-S35).

In a similar manner to the above steps S33-S35, the warning display against the drive B is turned off (steps S36-S38). This completes the card removal operation.

In the digital camera 1 (cf. Figs. 1-5) of this preferred embodiment as has been described, in response to card insertion in the card slot 17a or 17b (cf. Fig. 5), the overall control unit 211 (cf. Fig. 5) as display control means changes items (i.e., displayed contents) on the LCD 10 (cf. Fig. 5) as display means according to the type of card inserted. That is, the screen displays items responsive to the card type (e.g., the uninstall setting item UD in Fig. 17, the items AI, AS and the selection items "CD", "Radio" in (g) of Fig. 19, the items MI1, MI2, VS and the selection items "NTSC", "PAL" in (g) of Fig. 21, and the telephone numbers TN1-TN3 in Fig. 23). Operation responsive to such items achieves ease of use of the card, thereby enhancing operability.

In the preference mode (cf. (f) of Fig. 19 and (f) of Fig. 21), the overall control unit 211 (cf. Fig. 5) as display control means additionally displays, as menus, functions available with a function card inserted in each of the card slots 17a and 17b (cf. Fig. 5). With those menus on display, a user can readily grasp available functions. This simplifies operation responsive to the functions, thereby enhancing operability.

The overall control unit 211 (cf. Fig. 5) as card discrimination means determines whether the card inserted in each of the card slots 17a and 17b (cf. Fig. 5) is either a memory card or a function card. When the card inserted is a function card, the overall control unit 211 causes the LCD 10 to display items (i.e., displayed contents) corresponding to added functions available with that function card. With such display, a user can readily grasp added functions. This simplifies operation responsive to the functions, thereby enhancing operability.

The overall control unit 211 (cf. Fig. 5) can control a display on the LCD 10 (cf. Fig. 5) by selection of modes: (1) the playback mode; (2) the recording mode; and (3) the preference or setting mode. The preference mode can accept operational input to items which are basic setting items for a function card (i.e., the items SI1, SI2 and the uninstall setting item UD in Fig. 17, the item AS in (e) and (f) of Fig. 19, the item VS in Fig. 21). This enhances operability in operational input to the basic setting items for a function card.

In the preference mode, the LCD 10 further displays selection items (i.e., "CD", "Radio" in (g) of Fig. 19, "NTSC", "PAL" in (g) of Fig. 21, and the telephone numbers TN1-TN3 in Fig. 23) for a plurality of settings of the function card 92 inserted in either the card slot 17a or 17b, which allows a user to select either of the selection items by operational input. With those selection items on display, a user can readily grasp a plurality of functions of the function card 92 and can set a desired function with ease.

When the function card inserted in the digital camera 1 (cf. Figs. 1-5) is the audio card 92f as an audio input card, the selection items in the preference mode are a plurality of kinds of audio quality (i.e., the sampling rate "CD", "Radio" in (g) of Fig. 19). That is, essential functions of the audio card 92f are displayed in an easy to understand way. This allows a user to readily grasp those functions and to set a desired audio input function (audio quality) with ease by selection of such selection items.

When the function card inserted in the digital camera 1 (cf. Figs. 1-5) is the video output card 92e, the selection items in the preference mode are a plurality of kinds of video output formats (i.e., "NTSC", "PAL" in (g) of Fig. 21). That is, essential functions of the video output card 92e are displayed in an easy to understand way. This allows a user to readily grasp those functions and to set a desired video output function (video output format) with ease by selection of such selection items.

As shown in Figs. 19, 21 and 23, the preference mode is a mode of displaying only the functions available with the function card inserted in the card slot (cf. (g) of Figs. 19 and 20, and Fig. 23). That is, with the minimum selection items on display, a user does not have to make a needless selection. This further enhances operability.

In the recording mode, as shown in Fig. 5, the overall control unit 211 as display control means displays temporary images on the LCD 10 and, upon insertion of the function card 92 in either the card slot 17a or 17b, it changes the recording-mode display (i.e., displayed contents) on the LCD 10 according to the functions of the function card 92. That is, the display in the recording mode is responsive to the function card 92 and operation is performed according to that display. This achieves ease of use of the function card 92, thereby enhancing operability.

As shown in Fig. 2, the digital camera 1 has, in the vicinity of the LCD 10, the key switch 223 (the audio key of Fig. 19 or the monitor key of Fig. 21 in the recording mode) which is a function switch assigned an added function available with the function card 92. In the recording mode, therefore, a user can activate the added function of the function card 92 while checking the item AI or MI1, MI2 on the LCD 10. This further enhances operability.

With the audio card 92f inserted, sound can be recorded while the key switch 223 is in the ON position. This simplifies audio input in the recording mode. With the video output card 92e inserted, video output from the video output card 92e is enabled or disabled by switching of the key switch 223. This simplifies video output control in the recording mode.

In the playback mode, as shown in Fig. 5, the overall control unit 211 as display control means displays already-captured and recorded images on the LCD 10, and upon insertion of the function card 92 in either the card slot 17a or 17b, it changes the playback-mode display (i.e., displayed contents) on the LCD 10 according to the functions of the function card 92. That is, the display in the playback mode is responsive to the function card 92 and operation is performed according to that display. This achieves ease of use of the function card 92, thereby enhancing operability.

As shown in Fig. 2, the digital camera 1 has, in the vicinity of the LCD 10, the key switch 223 (the audio key of Fig. 19 or the monitor key of Fig. 21 in the recording mode) which is a function switch assigned an added function available with the function card 92. In the playback mode, therefore, a user can activate the added function of the function card 92 while checking the display on the LCD 10. This further enhances operability.

With the audio card 92f inserted, sound corresponding to the image being displayed on the LCD 10 can be played back while the key switch 223 is in the ON position. This simplifies audio output in the playback mode.

With the video output card 92e inserted, video output from the video output card 92e is enabled or disabled by switching of the key switch 223. This simplifies video output control in the playback mode.

As shown in Fig. 22, when the card inserted in the card slot is a modem card which is one of the function cards (cf. step S40), upon insertion of this modem card in the card slot, the LCD displays, regardless of its previous display status, the connection mode for communications which correspond to the preference mode capable of accepting operational input to the selection items (i.e., telephone numbers TN1-TN3 in Fig. 23) for a plurality of settings of the modem card (cf. step S41). That is, after insertion of a modem card, a predetermined setting (selection of a connection destination) can immediately be made without transition from any other mode to the connection mode for communications, which accelerates the settings.

When the card inserted in the card slot is a function card and the preference or setting mode capable of accepting operational input to a predetermined setting item is selected, the screen displays items responsive to added functions available with the function card (cf. Figs. 19, 21, and 23). A user can thus readily grasp added functions and can perform operation responsive to that function. This enhances operability.

Moreover, the setup memory card SM (cf. Fig. 5) which stores control programs or update programs for those control programs is used for installation or updating of the control programs. By using such a card, the electronic equipment (e.g., the digital camera of Figs. 1-5) comprising a microprocessor and card slots can achieve the effects as above described.

In the above preferred embodiments, examples of the digital camera and its method of control, and the recording medium are given, but it is to be understood that the present invention is not limited thereto.

While the setup memory card SM (cf. Fig. 5) has been given as an example of recording media according to the present invention, the recording media may be any other media such as CD-ROMs and floppy disks. In such cases, CD-ROM drives or floppy disk drives should be connected to the electronic equipment with the USB card, the IEEE-1394 card, or the like, thereby to perform installation.

In the above preferred embodiment, regardless of the previous display status, the insertion of a modem card causes a forced transition to the preference mode. Similarly, the insertion of other function cards such as an ISDN card may cause such a forced transition to the preference mode. On the contrary, in the case of insertion of a modem card, the transition to the preference mode may be done by switching of the mode selection switch 14 as in the case of insertion of other function cards.

While the invention has been shown and described in detail, the foregoing description is in all aspects illustrative and not restrictive. It is therefore understood that numerous modifications and variations can be devised without departing from the scope of the invention.

## Claims

1. A digital camera <1> for generating digital image data on a subject, comprising:
a card slot part <17> having a card slot <17a, 17b>;
display means <10>;
display control means <211> for controlling said display means; and
card discrimination means <211> for recognizing card insertion in said card slot, characterized in that
said card discrimination means determines whether a card inserted in said card slot is either a memory card <91> for storing image data obtained with said digital camera or a function card <92> for adding a function to said digital camera in which said memory card is inserted, and
when said card is judged as being a function card, said display control means controls said display means to display contents corresponding to an added function available with said function card.

2. The digital camera according to claim 1, wherein
said display control means can control said display means in accordance with a mode selected from a plurality of modes including:
a playback mode of displaying a captured and recorded image;
a recording mode of displaying a temporary image obtained through image capturing; and
a setting mode capable of accepting input to a predetermined setting item on said digital camera, and
said setting mode is capable of accepting input to a setting item <SI1, SI2, AS, VS> for said function card.

3. The digital camera according to claim 2, wherein
in said setting mode, selection items for said setting item for said function card inserted in said card slot are displayed on said display means, and any of said selection items can be selected for input.

4. The digital camera according to claim 3, wherein
said function card is an audio input card <92f>, and
said selection items in said setting mode are a plurality of kinds of audio quality.

5. The digital camera according to claim 3, wherein
said function card is a video output card <92e>, and
said selection items in said setting mode are a plurality of kinds of video output formats.

6. The digital camera according to any of claims 2 to 5, wherein
said setting mode is a mode of displaying only a function available with said function card inserted in said card slot.

7. The digital camera according to claim 1, wherein
said display control means comprises:
means <211> for displaying a temporary image on said display means after image capturing; and
means <211> for changing contents displayed on said display means according to a function of said function card inserted in said card slot.

8. The digital camera according to claim 7, further comprising
a function switch <14> provided in the vicinity of said display means and assigned an added function available with said function card.

9. The digital camera according to claim 8, wherein
said function card <92f> is a card for adding an audio input function, and audio recording is possible while said function switch is turned on.

10. The digital camera according to claim 8, wherein
said function card <92e> is a card for adding a video output function, and
video output from said function card is enabled or disabled by switching of said function switch.

11. The digital camera according to claim 1, wherein
said display control means comprises:
means <211> for displaying an image stored in said memory card on said display means during playback; and
means <211> for changing contents on said display means during playback according to a function of said function card inserted in said card slot.

12. The digital camera according to claim 11, further comprising
a function switch <14> provided in the vicinity of said display means and assigned an added function available with said function card.

13. The digital camera according to claim 12, wherein
said function card <92f> is a card for adding an audio output function, and
audio corresponding to an imaged being displayed on said display means is played back while said function switch is turned on.

14. The digital camera according to claim 12, wherein
said function card <92e> is a card for adding a video output function, and
video output from said function card is enabled or disabled by switching of said function switch.

15. A digital camera <1> for generating digital image data on a subject, comprising:
a card slot part <17> having a card slot <17a, 17b>;
display means <10>; and
display control means <211> for controlling said display means, characterized in that
in response to insertion of a card <91, 92> in said card slot, said display control means changes items <SI1, SI2, AS, VS> on said display means according to a type of said card.

16. The digital camera according to claim 15, wherein
said card slot part can load a memory card <91> for storing image data obtained with said digital camera and a function card <92> for adding a function to said digital camera in which said memory card is inserted, and
said display control means additionally displays, as a menu, a function available with said function card inserted in said card slot.

17. A method of controlling a digital camera <1> which comprises display means <10> and a card slot <17a, 17b> for generating digital image data on a subject, comprising the steps of:
determining a type of a card inserted in said card slot <S3, S6>;
determining whether said card is either a memory card <91> for storing image data obtained with said digital camera or a function card <92> for adding a predetermined function to said digital camera <S3>; and
when said card is judged as being a function card and a setting mode of accepting input to a predetermined setting item for said card is selected, controlling said display means to display contents corresponding to an added function available with said function card <S8>.

18. A method of controlling a digital camera <1> which comprises display means <10> and a card slot <17a, 17b> for generating digital image data on a subject, comprising the steps of:
detecting card insertion in said card slot <S1>;
determining a type of a card inserted in said card slot <S3, S6>;
determining whether said card is either a memory card <91> for storing image data obtained with said digital camera or a function card <92> for adding a predetermined function to said digital camera <S3>; and
when the type of said card is judged as being a function card, in response to insertion of said function card in said card slot, displaying on said display means a setting mode capable of accepting operational input to selection items for a setting item <SI1, SI2, AS, VS> for said function card, irrespective of a previous display status <S8>.

19. A recording medium <SM> for recording a program which is readable by a digital camera <1> having a card slot <17a, 17b> or by a computer,
said program, by being installed in said digital camera, allowing said digital camera to function as the digital camera according to any of claims 1 to 16.
